# DEMANDE DE BREVET EUROPEEN

(11) **EP 3 210 833 A1**
(43) Date de publication de la demande: **30.08.2017**
(21) Numéro de dépôt: 17158002.0
(22) Date de dépôt: 24.02.2017
(51) Int. Cl.: B60R 13/01, B60R 13/08

(54) **FAUX-PLANCHER POUR VÉHICULE AUTOMOBILE**

(30) Priorité: 25.02.2016 FR 1651567
(71) Demandeur: Cera APS, 51100 Reims (FR)
(72) Inventeur: SARES, Laurent, 51100 Reims (FR)
(74) Mandataire: Sayettat, Julien Christian

(57) **Abrégé**

L'invention concerne un faux-plancher (1) comprenant : une plaque (2) rigide de réception des pieds des passagers ; un corps (3) moulé en mousse de polyuréthanne élastiquement compressible s'étendant sensiblement sur toute la face d'envers (4) de ladite plaque, ladite face étant surmoulée par ledit corps, ladite mousse présentant une caractéristique de contrainte-déformation relative en compression CC₄₀, mesurée selon la norme ISO 3386/2, comprise entre 3 et 15 kPa ; au moins un moyen de piètement (5) localisé de ladite plaque, ledit moyen étant sous forme d'un bloc surmoulé par ledit corps, ledit moyen présentant une extrémité supérieure (6) prenant appui contre ladite face d'envers et une extrémité inférieure (7) affleurant la face inférieure (9) dudit corps, le matériau constitutif dudit moyen étant élastiquement compressible et présentant une caractéristique de contrainte-déformation relative en compression CC₄₀, mesurée selon la norme ISO 3386/2, comprise entre 25 et 80 kPa.

## Description

L'invention concerne un faux-plancher pour véhicule automobile, un procédé de réalisation d'un tel faux-plancher et un montage d'un tel faux-plancher.

Il est connu de réaliser un faux-plancher pour véhicule automobile, ledit faux-plancher comprenant :
- une plaque rigide - par exemple en bois aggloméré - de réception des pieds des passagers,
- un corps moulé en mousse de polyuréthanne élastiquement compressible s'étendant sensiblement sur toute la face d'envers de ladite plaque, ladite face étant surmoulée par ledit corps, ladite mousse présentant une caractéristique de contrainte-déformation relative en compression CC₄₀, mesurée selon la norme ISO 3386/2, comprise entre 3 et 15 kPa,
- au moins un - et notamment plusieurs - moyen de piètement localisé de ladite plaque, ledit moyen étant sous forme d'un bloc surmoulé par ledit corps, ledit moyen présentant une extrémité supérieure prenant appui contre ladite face d'envers et une extrémité inférieure affleurant la face inférieure du corps.

Un tel faux-plancher est destiné à être posé sur une paroi de sol du véhicule, le corps en mousse présentant une face inférieure adaptée à la géométrie de ladite paroi de manière à prendre appui dessus.

L'utilisation d'une plaque rigide permet de garantir une bonne planéité du faux-plancher sous charge.

Par ailleurs, de par sa nature élastiquement compressible, le corps en mousse assure un amortissement des vibrations du véhicule et contribue à son confort acoustique.

Cependant, il peut se produire que, dans une ou plusieurs zones localisées, on ait besoin d'une portance accentuée afin d'éviter un fléchissement trop important du faux-plancher sous charge, ceci du fait du caractère compressible du corps. De telles zones sont par exemple localisées en bord de plaque, au niveau des entrées de porte, ou en bord d'ouvertures ménagées dans ladite plaque, lesdites ouvertures étant par exemple disposées au niveau des glissières de sièges, un risque pouvant notamment se présenter qu'un passager coince l'avant de sa chaussure entre le faux-plancher et une structure avoisinante du véhicule.

Pour pallier cet inconvénient, il est connu de disposer de façon localisée au moins un moyen de piètement selon les modalités sus-décrites, ledit moyen étant à base de matériau de haute rigidité - par exemple de bois - pour pouvoir remplir sa fonction, donc non élastiquement compressible.

Il en résulte un transfert des vibrations du véhicule par au moins un moyen de piètement, ceci malgré le fait que le faux-plancher repose par ailleurs, par la face inférieure du corps en mousse, sur la paroi de sol, ce qui a des répercussions négatives en terme de confort acoustique.

L'invention a pour but de pallier cet inconvénient.

A cet effet, et selon un premier aspect, l'invention propose un faux-plancher pour véhicule automobile, ledit faux-plancher comprenant :
- une plaque rigide de réception des pieds des passagers,
- un corps moulé en mousse de polyuréthanne élastiquement compressible s'étendant sensiblement sur toute la face d'envers de ladite plaque, ladite face étant surmoulée par ledit corps, ladite mousse présentant une caractéristique de contrainte-déformation relative en compression CC₄₀, mesurée selon la norme ISO 3386/2, comprise entre 3 et 15 kPa,
- au moins un moyen de piètement localisé de ladite plaque, ledit moyen étant sous forme d'un bloc surmoulé par ledit corps, ledit moyen présentant une extrémité supérieure prenant appui contre ladite face d'envers et une extrémité inférieure affleurant la face inférieure dudit corps,
le matériau constitutif dudit moyen étant élastiquement compressible et présentant une caractéristique de contrainte-déformation relative en compression CC₄₀, mesurée selon la norme ISO 3386/2, comprise entre 25 et 80 kPa.

Avec un tel agencement, on assure, du fait du caractère élastiquement compressible du moyen de piètement, un amortissement des vibrations par ledit moyen qui présente par ailleurs une portance bien supérieure à celle de la mousse du corps, ce qui permet de lui conférer pleinement sa fonction de piètement permettant de maintenir le faux-plancher à hauteur sensiblement constante, qu'il soit ou non mis sous charge.

On notera ici que, du fait du surmoulage de moyens de piètement par le corps en mousse, on assure une cohésion optimale desdits moyens dans le faux-plancher, ce qui est particulièrement pertinent lorsque lesdits moyens sont situés en périphérie dudit faux-plancher ou à proximité d'une ouverture ménagée dans la plaque, par exemple au niveau d'une glissière de siège.

Selon d'autres aspects, l'invention propose un procédé de réalisation et un montage d'un tel faux-plancher.

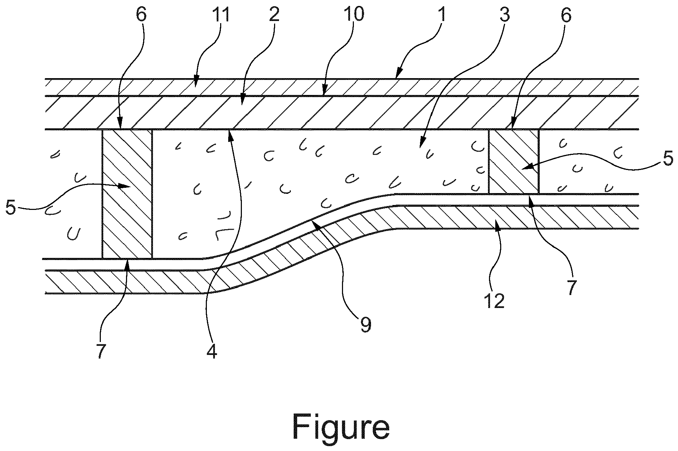

D'autres particularités et avantages de l'invention apparaîtront dans la description qui suit, faite en référence à la figure jointe qui est une vue schématique en coupe partielle d'un montage de faux plancher selon une réalisation.

En référence à la figure, on décrit un faux-plancher 1 pour véhicule automobile, ledit faux-plancher comprenant :
- une plaque 2 rigide - par exemple en bois aggloméré - de réception des pieds des passagers,
- un corps 3 moulé en mousse de polyuréthanne élastiquement compressible s'étendant sensiblement sur toute la face d'envers 4 de ladite plaque, ladite face étant surmoulée par ledit corps, ladite mousse présentant une caractéristique de contrainte-déformation relative en compression CC₄₀, mesurée selon la norme ISO 3386/2, comprise entre 3 et 15 kPa,
- au moins un - plusieurs dans la réalisation représentée - moyen de piètement 5 localisé de ladite plaque, ledit moyen étant sous forme d'un bloc surmoulé par ledit corps, ledit moyen présentant une extrémité supérieure 6 prenant appui contre ladite face d'envers et une extrémité inférieure 7 affleurant la face inférieure 9 dudit corps,
le matériau constitutif dudit moyen étant élastiquement compressible et présentant une caractéristique de contrainte-déformation relative en compression CC₄₀, mesurée selon la norme ISO 3386/2, comprise entre 25 et 80 kPa.

Selon une réalisation, la plaque 2 est en bois aggloméré, et présente notamment module de Young compris entre 3000 et 4000 MPa.

Dans ce cas d'une plaque 2 en bois aggloméré, on peut prévoir notamment de lui conférer une épaisseur supérieure à 2 mm, de sorte que ladite plaque présente une bonne rigidité.

Bien entendu, la plaque 2 peut être réalisée avec d'autres matériaux, tels que du carton ou un thermoplastique conformés en nid d'abeille d'épaisseur suffisante pour présenter une bonne rigidité.

Selon une réalisation, la plaque 2 est généralement étanche et présente une masse surfacique supérieure à 1800 g/m², de sorte que le faux-plancher 1 forme un système isolant acoustique de type masse-ressort, où la masse est formée par ladite plaque - revêtue éventuellement d'une couche de revêtement 11 - et le ressort par le corps 3 pourvu d'au moins un moyen de piètement 5.

Lorsqu'il est dit que la plaque 2 est généralement étanche, cela n'exclut pas le fait qu'on puisse y prévoir, de façon non représentée, au moins une ouverture de passage d'organe, ledit organe étant par exemple sous forme de glissière de siège, ladite ouverture se prolongeant par un conduit traversant le corps 3. Selon une réalisation, le matériau constitutif du moyen de piètement 5 est à base de mousse de polyuréthanne.

Plus particulièrement, le matériau constitutif du moyen de piètement 5 peut être à base de flocons de mousse agglomérés par un liant ou de mousse découpée dans un bloc de mousse.

Selon une réalisation, le corps 3 présente une densité comprise entre 0,05 et 0,06 et un moyen de piètement 5 présente une densité comprise entre 0,12 et 0,20.

Selon une réalisation, un moyen de piètement 5 est disposé en bord extérieur de la plaque 2 - par exemple en pas de porte du véhicule - ou en bord d'une ouverture - par exemple au niveau d'une glissière de siège - ménagée dans ladite plaque.

Selon une réalisation, la face d'endroit 10 de la plaque 2 est revêtue d'une couche de revêtement 11, par exemple à base de moquette ou de matériau plastique.

Selon une réalisation, la masse surfacique de la couche 11 est supérieure à 500 g/m², une telle masse contribuant à optimiser les performances d'isolation acoustique du faux-plancher 1 selon un principe masse-ressort.

On décrit à présent un procédé de réalisation d'un tel faux-plancher 1, ledit procédé comprenant les étapes suivantes :
- prévoir une plaque 2 rigide de réception des pieds des passagers,
- poser ladite plaque sur une première paroi d'un moule,
- disposer sur la face d'envers 4 de ladite plaque au moins un moyen de piètement 5 sous forme d'un bloc, le matériau constitutif dudit moyen étant élastiquement compressible et présentant une caractéristique de contrainte-déformation relative en compression CC₄₀, mesurée selon la norme ISO 3386/2, comprise entre 25 et 80 kPa, l'extrémité supérieure 6 dudit bloc prenant appui sur ladite face et l'extrémité inférieure 7 dudit bloc étant positionnée par rapport à ladite extrémité supérieure de manière à affleurer une deuxième paroi dudit moule faisant face à ladite première paroi,

- injecter dans ledit moule un mélange précurseur de mousse de polyuréthanne élastiquement compressible permettant d'obtenir une mousse de caractéristique de contrainte-déformation relative en compression CC₄₀, mesurée selon la norme ISO 3386/2, comprise entre 3 et 15 kPa, de manière à former un corps 3 en mousse surmoulant sensiblement toute ladite face d'envers et ledit moyen,
- démouler l'ensemble obtenu.

On décrit enfin un montage de faux-plancher 1, ledit montage comprenant un faux-plancher 1 et une paroi 12 de sol du véhicule, notamment sous forme de tôle, la face inférieure 9 du corps 3 étant conformée de manière à épouser sensiblement la géométrie de ladite paroi pour y prendre appui avec au moins un moyen de piètement 5.

## Revendications

1. Faux-plancher (1) pour véhicule automobile, ledit faux-plancher comprenant :
• une plaque (2) rigide de réception des pieds des passagers,
• un corps (3) moulé en mousse de polyuréthanne élastiquement compressible s'étendant sensiblement sur toute la face d'envers (4) de ladite plaque, ladite face étant surmoulée par ledit corps, ladite mousse présentant une caractéristique de contrainte-déformation relative en compression CC₄₀, mesurée selon la norme ISO 3386/2, comprise entre 3 et 15 kPa,
• au moins un moyen de piètement (5) localisé de ladite plaque, ledit moyen étant sous forme d'un bloc surmoulé par ledit corps, ledit moyen présentant une extrémité supérieure (6) prenant appui contre ladite face d'envers et une extrémité inférieure (7) affleurant la face inférieure (9) dudit corps,
ledit faux-plancher étant **caractérisé en ce que** le matériau constitutif dudit moyen est élastiquement compressible et présente une caractéristique de contrainte-déformation relative en compression CC₄₀, mesurée selon la norme ISO 3386/2, comprise entre 25 et 80 kPa.

2. Faux-plancher selon la revendication 1, **caractérisé en ce que** la plaque (2) est généralement étanche et présente une masse surfacique supérieure à 1800 g/m², de sorte que ledit faux-plancher forme un système isolant acoustique de type masse-ressort.

3. Faux-plancher selon l'une des revendications 1 ou 2, **caractérisé en ce que** la plaque (2) est pourvue d'au moins une ouverture de passage d'organe, ladite ouverture se prolongeant par un conduit traversant le corps (3).

4. Faux-plancher selon l'une quelconque des revendications 1 à 3, **caractérisé en ce que** le matériau constitutif du moyen de piètement (5) est à base de mousse de polyuréthanne.

5. Faux-plancher selon la revendication 4, **caractérisé en ce que** le matériau constitutif du moyen de piètement (5) est à base de flocons de mousse agglomérés par un liant ou de mousse découpée dans un bloc de mousse.

6. Faux-plancher selon l'une quelconque des revendications 1 à 5, **caractérisé en ce que** le corps (3) présente une densité comprise entre 0,05 et 0,06 et **en ce qu'**un moyen de piètement (5) présente une densité comprise entre 0,12 et 0,20.

7. Faux-plancher selon l'une quelconque des revendications 1 à 6, **caractérisé en ce qu'**un moyen de piètement (5) est disposé en bord extérieur de la plaque (2) ou en bord d'une ouverture ménagée dans ladite plaque.

8. Procédé de réalisation d'un faux-plancher selon l'une quelconque des revendications 1 à 7, ledit procédé comprenant les étapes suivantes :
• prévoir une plaque (2) rigide de réception des pieds des passagers,
• poser ladite plaque sur une première paroi d'un moule,
• disposer sur la face d'envers (4) de ladite plaque au moins un moyen de piètement (5) sous forme d'un bloc, le matériau constitutif dudit moyen étant élastiquement compressible et présentant une caractéristique de contrainte-déformation relative en compression CC₄₀, mesurée selon la norme ISO 3386/2, comprise entre 25 et 80 kPa, l'extrémité supérieure (6) dudit bloc prenant appui sur ladite face et l'extrémité inférieure (7) dudit bloc étant positionnée par rapport à ladite extrémité supérieure de manière à affleurer une deuxième paroi dudit moule faisant face à ladite première paroi,
• injecter dans ledit moule un mélange précurseur de mousse de polyuréthanne élastiquement compressible permettant d'obtenir une mousse de caractéristique de contrainte-déformation relative en compression CC₄₀, mesurée selon la norme ISO 3386/2, comprise entre 3 et 15 kPa, de manière à former un corps (3) en mousse surmoulant sensiblement toute ladite face d'envers et ledit moyen,
• démouler l'ensemble obtenu.

9. Montage de faux-plancher, ledit montage comprenant un faux-plancher (1) selon l'une quelconque des revendications 1 à 8 et une paroi (12) de sol du véhicule, la face inférieure (9) du corps (3) étant conformée de manière à épouser sensiblement la géométrie de ladite paroi pour y prendre appui avec au moins un moyen de piètement (5).
